# EUROPÄISCHE PATENTSCHRIFT

(11) **EP 1 060 862 B1**
(45) Veröffentlichungstag und Bekanntmachung des Hinweises auf die Patenterteilung: **26.11.2003**
(21) Anmeldenummer: 99117747.8
(22) Anmeldetag: 09.09.1999
(51) Int. Cl.: B29C 45/14, B29C 33/12, B29L 31/34

(54) **Verfahren zum Betrieb einer Spritzgussform und eine nach dem Verfahren arbeitende Spritzgussform**
Process of injection moulding and injection mould using this process
Methode de moulage par injection et moule pour utiliser cette méthode de moulage

(30) Priorität: 18.06.1999 DE 19927862
(43) Veröffentlichungstag der Anmeldung: 20.12.2000
(73) Patentinhaber: HTP High Tech Plastics AG, 7201 Neudörfl an der Leitha (AT)
(72) Erfinder: Schumi,Christian,, 9500 Villach (AT); Pallanits,Josef, 7372 Drassmarkt (AT)
(74) Vertreter: Riebling, Peter, Dr.-Ing.

(56) Entgegenhaltungen:
- DE-A- 2 114 366
- DE-C- 4 023 967
- US-A- 5 448 824
- PATENT ABSTRACTS OF JAPAN vol. 11, no. 160 (M-592), 23. Mai 1987 (1987-05-23) -& JP 61 295018 A (MATSUSHITA ELECTRIC WORKS LTD), 25. Dezember 1986 (1986-12-25)

## Beschreibung

Gegenstand der Erfindung ist ein Verfahren zum Betrieb einer Spritzgußform und eine nach dem Verfahren arbeitende Spritzgußform nach dem Oberbegriff der unabhängigen Patentansprüche.

Eine Spritzgußform der eingangs genannten Art ist beispielsweise mit dem Gegenstand der DE 197 16 539 A1 bekanntgeworden. Bei dieser Druckschrift wird eine Spritzgußform für einen Spulenkörper vorgeschlagen, der Anschlußelemente aufweist. Der Wickelkörper des Spulenkörpers und die Anschlußelemente werden jedoch in einem Zweikomponenten-Spritzgießverfahren gemeinsam an den Spulenkörper angeformt. Hierbei werden die metallischen Anschlußelemente nicht in die Spritzgußform eingelegt, sondern es wird mit zwei unterschiedlichen Kunststoffmaterialien gespritzt, wobei das eine Kunststoffmaterial dann metallisiert wird, um die Anschlußelemente dort anzubringen. Nachteil dieses bekannten Spritzgußverfahrens ist, daß es sehr kompliziert und aufwendig ist, weil die Anschlußelemente nicht unmittelbar in der Spritzgußform angeformt werden.

Die DE 43 32 339 C2 offenbart einen Spulenkörper aus Kunststoff, der in einem Spritzgußwerkzeug hergestellt wird, wobei die Anschlußstifte in einem späteren Verfahrensschritt an den Kunststoffkörper angesteckt werden.
Die DE 196 44 746 C1 betrifft ebenfalls einen Spulenkörper, bei dem in den Spulenkörper lediglich Drahtführungsschlitze angeformt werden, in weiche in einem späteren Verfahrensschritt die erforderlichen Anschlußdrähte eingezogen werden.

Die DE 21 14 366 A, von der bei der Bildung des Oberbegriffs der unabhängigen Patentansprüche ausgegangen wurde, offenbart eine Vorrichtung zum gleichzeitigen Umspritzen mehrerer Metallteile mit Kunststoff, wobei hier dem Spritzgusswerkzeug ein Endlos-Draht zugeführt wird, der vor dem Schließen des Spritzgusswerkzeugs durch geeignete Mittel in Form gebracht wird. Dann erst wird die Spritzgussform geschlossen und der Draht mit Kunststoff umspritzt. Eine ähnliche Vorrichtung ist in der JP 61 295018 A offenbart. Ein Umformen des Drahtes beim Schließvorgang der Gussform oder gar bei geschlossener Gussform ist in diesen Dokumenten nicht beschrieben.
Die DE 40 23 967 C1 offenbart ein Verfahren zum Umspritzen von als Endlos-Strang zugeführten Metallteilen. Auch hier erfolgt kein Umformen des Drahtes beim Schließvorgang der Gussform.

Die US-A-5 448 824 beschreibt ein Verfahren, bei dem einzelne, bereits abgelängte Drahtstücke in die Spritzgussform eingelegt werden, wobei die Drahtstücke dann durch Schließen der Formhälften in ihre Form gebogen und danach mit Kunststoff umspritzt werden. Eine Verwendung von Endlos-Draht ist hier nicht beschrieben.

Der Erfindung liegt die Aufgabe zugrunde, ein Verfahren und eine nach dem Verfahren arbeitende Spritzgußform der eingangs genannten Art so weiterzubilden, daß während eines Spritzgußzyklus das Spritzgußteil gespritzt und Insertelemente form- und lagerichtig in das Spritzgußteil integriert werden können.

Gelöst wird diese Aufgabe erfindungsgemäss durch die Merkmale der unabhängigen Patentansprüche.

Vorteilhafte Weiterbildungen der Erfindung sind Gegenstand der betreffenden abhängigen Ansprüche.

Die Erfindung beruht darauf, daß ein insertelement aus endlos zugeführtem Draht oder Drahtelementen gebildet und durch den Werkzeugschließvorgang in Form gebracht wird, um dann während des Spritzgießvorganges von dem Kunststoff umspritzt zu werden.

Mit dem vorliegenden, erfindungsgemäßen Verfahren ergibt sich der wesentliche Vorteil, daß praktisch in ein und demselben Arbeitszyklus, d.h. während des Formspritzens, die Insertelemente in die Form eingebracht werden und durch den Werkzeugschließvorgang so zugerichtet und gebogen werden, daß sie lagerichtig dem späteren Spritzgußteil zugeordnet werden, und daß dann das Spritzgußteil selbst durch Formspritzen hergestellt wird, wobei das Insertelement von dem Kunststoff des Spritzgußteils umspritzt wird.

Damit ergeben sich wesentliche Verfahrensvereinfachungen und Herstellungsvereinfachungen, weil der Spritzgußvorgang wesentlich schneller abläuft als es mit bisherigen Verfahren möglich war. Es ergibt sich dadurch eine effizientes Herstellungsverfahren mit höherer Präzision, weil das Biegen und Zurichten des metallischen Insertelements erst in der Form stattfindet und dieses gegenüber dem Spritzgußteil exakt positioniert werden kann.
Daher spielen Dimensionsungenauigkeit beim Zurichten des metallischen Insertelements, die durch eventuelle Temperaturunterschiede entstehen, keine Rolle mehr. Aufgrund der Formtemperatur wird auch der zuzuführende Draht auf die entsprechende Temperatur temperiert, und erst unterhalb dieser Temperatur wird das Insertelement umgeformt, um dann unmittelbar in die Formkavität eingelegt und dort fixiert zu werden.

Ein weiterer Vorteil der Erfindung liegt darin, daß man mit äußerster Präzision zuführen kann, denn zur Ausbildung der Insertelemente muß lediglich ein relativ dünner Draht o.ä. zugeführt werden. Bisher mußten die fertig geformten Insertelemente zugeführt werden, was mit höchsten Schwierigkeiten verbunden war, wollte man eine gute Positioniergenauigkeit erreichen. Will man nämlich millimeterkleine Insertelemente aus Draht einzeln zuführen, benötigt man entsprechende kompliziert ausgebildete Zuführroboter, die nicht die hohe Präzision erbringen würden, als vergleichsweise das erfindungsgemäße Verfahren, weiches vorsieht, lediglich den Draht gesteuert zuzuführen und dann die Umformvorgänge in der Form vorzunehmen.

Dadurch wird die Zykluszeit bei der Herstellung von Formteilen mit Insertelementen wesentlich verkürzt, da alles in einem Arbeitszyklus vollzogen wird, wobei äußerst hohe Produktionsleistungen erzielbar sind.

Es können damit mit höchster Präzision auch kleine Kunststoffteile mit noch kleineren Insertelementen hergestellt werden, was vorher mit der geforderten Genauigkeit nicht möglich war.

Insgesamt ergeben sich deshalb folgende Vorteile:
- Automatischer 'Abzug' der metallischen 'Drähte', d.h. der sog. "Inserts" bzw. der "metallischen Einlegeelemente"
- Zugentlastung der Inserts für eine positionsgenaue Umspritzung
- Vollautomatischer Transport der Inserts in das Werkzeug
- Vollautomatischer Biegeprozeß im Werkzeug
- Vollautomatischer Schneideprozeß im Werkzeug
- Vollautomatische 'Randrierung' der Inserts zwecks optimaler Verankerung und damit Erhöhung der 'Auszugskraft' der Inserts aus dem Kunststoff-Spritzgußkörper
- Exakte Positionierung der Inserts im Spritzgußwerkzeug mittels punkt- und/oder linienförmiger Elemente
- Exakte Abdichtung bzw. Begrenzung der Insert-Elemente im Spritzgußwerkzeug und damit kein Entstehen von Kunststoffahnen bzw. - Stegebildung und damit keine Nacharbeitung bzw. gleichbleibende Qualität über eine große Anzahl von Spritzzyklen (hohe und gleichbleibende und fehlerfreie Werkzeugstandzeit).

Beim erfindungsgemässen Verfahren erfolgt der Vorschub von Drahtelementen in einem halbgeschlossenen Spritzgußwerkzeug derart, daß die Drahtenden mittels hochglanzpolierter Führungen umgelenkt werden und gewünschte räumliche Gebilde entstehen bzw. deren exakte Form durch den Werkzeugschließvorgang bewirkt wird und das alles bei extrem kurzen Taktzeiten.

Hierfür sind spezielle Spritzgußwerkzeugkonstruktionen erforderlich und die Enden der Insertelemente müssen speziell abgeschert werden (beispielsweise beim Schließen des Werkzeuges).

Ein nach dem Verfahren hergestellter Kunststoffspritzgußkörper weist mindestens ein metallisches Einlegeelement (Insertelement) auf, welches in Form eines runden und/oder quadratischen und/oder rechteckigen Drahtes ausgebildet ist. Hierbei kann der Draht auch einen beliebig gestalteten Querschnitt aufweisen, der vorteilhaft mindestens in bestimmten Bereichen randriert ist und der entweder gerade oder abgewinkelt ausgebildet ist.

Wichtig hierbei ist, daß die Insertelemente nur punktuell und/oder linienförmig in der gewünschten Spritzgußform positioniert werden und dann derart bis auf diese Positionierpunkte und/oder Linien vollständig vom Kunststoff des Spritzgußteils umgeben werden.

Eine Kunststoffspritzgußform nach der Erfindung sieht deshalb vor, daß an mindestens einer Hälfte der Spritzgußform die Drahtzuführung angeordnet ist und daß in der Spritzgußform die Drahtbiege- und Abschneidelemente angeordnet

In einer Weiterbildung der Erfindung ist vorgesehen, daß die Drahtzuführung entweder als lineare Zuführung mit entsprechenden Kolbenschiebern oder in einer anderen Ausführungsform in Form eines Walzenvorschubes ausgebildet ist.

Bei der Verwendung eines Walzenvorschubes besteht der Vorteil, daß mit den Walzen eine zusätzliche Bearbeitung der Drähte möglich ist. Sind nämlich die Oberflächen der Walzen entsprechend aufgerauht oder ausgeformt, können stellenweise oder durchgehend entsprechende Marken, Prägungen oder Randrierungen am zuzuführenden Draht vorgesehen werden.

Die Art der Drahtzuführung ist jedoch nicht lösungsnotwendig. Es kann jede beliebige Drahtzuführung verwendet werden, die geeignet ist, den Draht präzise um eine bestimmte Vorschubstrecke vorzuschieben und in der einen Formhälfte zu arretieren.

Wichtig ist, daß in der einen Formhälfte die Biege- und Umformwerkzeuge und gegebenenfalls auch die Abschneidewerkzeuge vorhanden sind, welche dafür sorgen, das so gebogene und abgeschnittene metallische Insertelement in der Form exakt zugerichtet und fixiert wird.

Selbstverständlich ist die vorliegende Erfindung nicht darauf beschränkt, die genannten Elemente lediglich in einer Formhälfte anzuordnen.

In einer anderen Ausgestaltung der vorliegenden Erfindung kann es vorgesehen sein, einen Teil dieser Elemente auch in der gegenüberliegenden Formhälfte anzuordnen. Beispielsweise ist es möglich, das Abschneiden des eingelegten Insertelements erst dann durchzuführen, wenn die Form vollständig geschlossen ist. In diesem Ausführungsbeispiel können dann die Schneidwerkzeuge an dem offenen Oberteil der Form angeordnet werden.

Das Verfahren nach der Erfindung sieht also vor, daß in einem ersten Verfahrensschritt bei geöffneten Formhälften über einen entsprechenden Drahtvorschub der Draht über eine definierte Länge in mindestens eine der Formhälften eingeführt wird und lagerichtig und positionsgenau fixiert wird. In einem zweiten Verfahrensschritt werden während des Werkzeugschließvorgangs die erforderlichen Umformvorgänge an dem Draht vorgenommen, der In beliebiger Weise geformt werden kann, wobei in einem weiteren Verfahrensschritt der Draht abgeschnitten und mit den vorher erwähnten Positions- und Fixiereiementen in der einen Formhälfte festgehalten wird. In einem nachfolgenden Verfahrensschritt wird in die Formkavität der Kunststoff eingespritzt, der dann das lagengenau und positionsgenau gehaltene Insertelement umspritzt und mit dem Kunststoffkörper verbindet.

Erfindungsggemäß ist demnach vorgesehen, daß lediglich die Drahteinführung und die Drahtfixierung bei geöffneten Formhälften erfolgt, und das Umformen und das Abschneiden des Drahtes dann bei sich schließenden Formhälften geschieht. Hierdurch wird die Produktionszeit nochmals verkürzt, weil während der Schließbewegung die notwendigen Umformvorgänge und Abschneidvorgänge am Insertelement stattfinden.

Ein weiterer wesentlicher Vorteil der Erfindung liegt darin, daß man sogenannte Spritzhosen nicht mehr erhält. Wenn man ein Drahtteil in eine Form einlegt, wie es beim Stand der Technik üblich ist, darin besteht der Nachteil, daß man diesen Draht in sogenannte Einlegefenster oder Einlegetrichter hindurchführen muß und hierbei zwischen dem Außenumfang des Drahtes und dem Einlegefenster immer ein geringes Spiel von einigen hundertstel Millimeter verbleiben muß, um überhaupt den Draht durch das Fenster hindurchführen zu können. Hier erfolgt keine exakte Abdichtung zwischen dem Fenster und dem das Fenster durchgreifenden Draht, so daß beim späteren Spritzgußvorgang durch diesen Zwischenraum hindurch Kunststoff dringt und den Draht in Form einer Kunststoffhose umhüllt. Dies ist nachteilig und bildet ein unschönes Aussehen des hergestellten Kunststoffartikels.

Diesen Nachteil vermeidet die Erfindung, weil aufgrund des erfindungsgemässen Verfahrens bei der Herstellung des Drahtes und dessen Zurichtung in der Spritzgußform dafür gesorgt wird, daß der Draht mit Hilfe von metallischen Schiebern so gequetscht und gepresst wird, daß er unmittelbar an metallischen Flächen festgehalten wird und hierdurch eine vollkommene Abdichtung gegenüber dem eindringenden Kunststoff geschieht. Man kann also auf ein dementsprechendes Fenster verzichten, weil der Draht allseitig von entsprechenden, absolut abdichtenden Schiebern umgeben ist und daher bildet sich eine derartige Kunststoffhose nicht mehr aus.

Die Vermeidung der Kunststoffhose hat aber nicht nur ästhetische Gründe. Werden derartige Insertdrähte als Anschlußelemente verwendet, muß beim Stand der Technik in Kauf genommen werden, daß ein Teil des Anschlußelementes nicht kontaktiert werden kann, weil dort die unerwünschte Kunststoffhose ausgebildet ist.

Ein Verfahren zum Betrieb eines Spritzgußwerkzeuges mit einem geraden Insert ist durch folgende Verfahrensschritte gekennzeichnet:
a) Vortakten der Drähte
   Die gestreckte Länge der Drähte wird von den Felgen, auf denen die Drähte lagegerichtet gewickelt sind, synchron zur Öffnungsbewegung des vorhergegangenen Zyklus, vollautomatisch abgezogen.
b) Positionieren der Drähte in der Kavität
   Entweder werden sie mit Umlenkkulissen in Position gebracht oder die Drähte werden mit Führungsbuchsen gehalten, die ein gratfreies Umspritzen garantieren.
c) Schneiden der Drähte
   Die Drähte werden durch vorgefederte Elemente während des Schließens oder durch extern angesteuerte Elemente geschnitten.
d) Schließen der Form
e) Geregelter Spritzprozeß
f) Öffnen der Form, bei gleichzeitigem Positionieren der Schneidelemente für den nächsten Zyklus.
g) Ausstoßen und Entnehmen der Teile
   Während der Öffnungsbewegung wird der Greiferentnahmekopf auf Position gebracht, beim Ausstoßen werden die Teile auf den Greifer geschoben.

Weitere optionale Verfahrensschritte sind:
h) Prüfen der Teile
   Während dem Ausfahren des Greiferentnahmekopfes werden die Teile bei einer optischen Prüfstation vorbeigeführt, bei einem positiven Signal wird die Form geschlossen und somit wird der Zyklus fortgeführt.
i) Ablegen der Teile
   Die Teile kommen nach der Überprüfung in die Vereinzelungsstation.
j) Periphere mechanische Nachbehandlung der Teile
   Die Teile bzw. die Inserts können während des vollautomatischen Betriebs nachbehandelt werden, z. B. spitzen oder rollieren der Inserts.

Ein Spritzgußwerkzeug, welches gebogene Insertelemente verarbeitet, ist durch die folgenden Verfahrensschritte gekennzeichnet:
a) Vortakten der Drähte
   Die gestreckte Länge der Drähte wird von den Felgen, auf denen die Drähte lagegerichtet gewickelt sind, synchron zur Öffnungsbewegung des vorhergegangenen Zyklus, vollautomatisch abgezogen.
b) Formen der Drähte während des Werkzeugschließvorgangs
   Die Drähte werden synchron zur Ausstoßbewegung des letzten Zyklus geformt.
c) Schneiden der Drähte
   Die Drähte werden mit Mechanikelementen, die pneumatisch oder hydraulisch getätigt werden, während des Schließens geschnitten.
d) Transport der Inserts
   Durch Fixierelemente wird eine lineare Lagefixierung der fertig bearbeiteten Inserts beim Transport in die Kavität erreicht.
e) Fixieren der Inserts
   Durch diese Fixierelemente werden die bearbeiteten Inserts in der Spritzposition gehalten und ein Umspritzen ohne Gratbildung ermöglicht.
f) Nach dem Schließen der Form
g) Geregelter Spritzprozeß
h) Öffnen der Form
   Die Spritzgießform wird parallel zu Punkt a) geöffnet.
i) Ausstoßen und Entnehmen der Teile
   Während der Öffnungsbewegung und Punkt a) wird der Greiferentnahmekopf auf Position gebracht, beim Ausstoßen werden die Teile auf den Greifer geschoben.

Weitere optionale Verfahrensschritte sind:
j) Prüfen der Teile
   Während dem Ausfahren des Greiferentnahmekopfes werden die Teile bei einer optischen Prüfstation vorbeigeführt, bei einem positiven Signal wird die Form geschlossen, und somit wird der Zyklus bei Punkt c) fortgeführt.
k) Ablegen der Teile
   Die Teile kommen nach der Überprüfung in die Vereinzelungsstation.
l) Periphere mechanische Nachbehandlung
   Die Teile bzw. die Inserts können während des vollautomatischen Betriebs nachbehandelt werden. Zum Beispiel Spitzen oder Rollieren der Inserts.

Im Verfahrensschritt b) können die Drähte selbstverständlich allen bekannten Umformprozessen unterworfen werden, wie z.B. Biegen, Kröpfen, Abflachen, Zuspitzen, und die Oberfläche des Drahtes entsprechend gestaltet werden, wie z.B. durch Randrieren, Prägen, Walzen, Anquetschen oder auch Auftragsmechanismen verwenden, wie z.B. eine Auftragsschweißung oder dgl. mehr.

Selbstverständlich ist die vorliegende Erfindung nicht darauf beschränkt, daß der Form Insertelemente in Form von endlosen Drähten zugeführt werden, die erst während und vor dem Spritzgußvorgang geformt, zugeführt und fixiert werden. Ebenso können der Form bereits entsprechend abgelängte Drahtstücke zugeführt werden, die gegebenenfalls in der Spritzgußform in Ihre endgültige Form gebogen werden. Ferner können in den Formelementen zusätzliche, bereits eingelegte Elemente vorhanden sein, die mit in den Kunststoffkörper eingespritzt werden.

Es ist beispielsweise auch das sogenannte "2K-Spritzen" möglich, welches vorsieht, daß zunächst ein Kunststoffkörper mit eingelegten metallischen Insertelementen fertiggestellt wird, welches geklemmt und hochgenau positioniert in der Formkavität verbleibt und dort aushärtet. Mit einer anderen Komponente des Spritzgußwerkzeuges können dann zusätzliche Teile angespritzt werden. Beispielsweise kann an die Halterung einer Linse für ein CD-Laufwerk, welche in dem vorher erwähnten Spritzgußvorgang mit den Insertelementen verbunden wurde, in einem zweiten Arbeitsgang die zugehörige Linse des CD-Laufwerkes angespritzt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch ein erstes Formwerkzeug in geöffnetem Zustand mit einer Drahtzuführung;
- Figur 2:: Das Formwerkzeug nach Figur 1 in geschlossenem Zustand und einer abgewandelten Drahtzuführung;
- Figur 3:: Das Flußdiagramm des Verfahrensablaufes;
- Figur 4:: Die Darstellung verschiedener Insertelemente in perspektivischer Ansicht;
- Figur 5:: Die Darstellung der linearen Drahtzuführung in zwei verschiedenen Zeitpunkten;
- Figur 6:: Schematisiert die Darstellung der Walzen-Drahtzuführung;
- Figur 7:: Zwei Ausführungsbeispiele für die Zuführung des Drahtes in die Formplatte;
- Figur 8:: Perspektivisch ein weiteres Insertelement mit Abkröpfung;
- Figur 9:: Die Darstellung der Herstellung dieses Insertelements nach Figur 8 mit zwei verschiedenen Verfahrensschritten;
- Figur 10:: Die Darstellung der Herstellung eines geraden Insertelements in zwei verschiedenen Verfahrensschritten;
- Figur 11:: Eine gegenüber Figur 7 abgewandelte Ausführungsform, in der gezeigt ist, wie das Insertelement fixiert wird;
- Figur 12:: Zwei verschiedene Ausführungen für die Einbringung des Insertelements in einen Kunststoffkörper;
- Figur 13: Eine weitere Ausgestaltung eines Kunststoffkörpers mit eingeformten Insertelementen;
- Figur 14:: Eine vierte Ausführungsform eines Kunststoffkörpers mit eingeformten Insertelementen;
- Figur 15:: Eine fünfte Ausführungsform eines Kunststoffkörpers mit eingeformten Insertelementen.

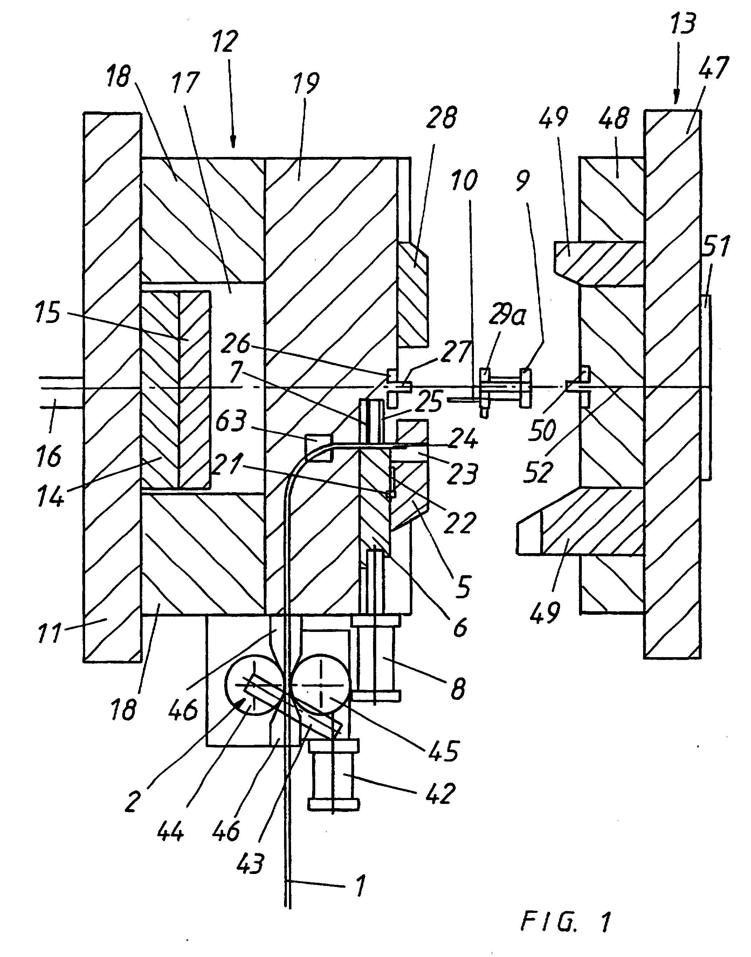

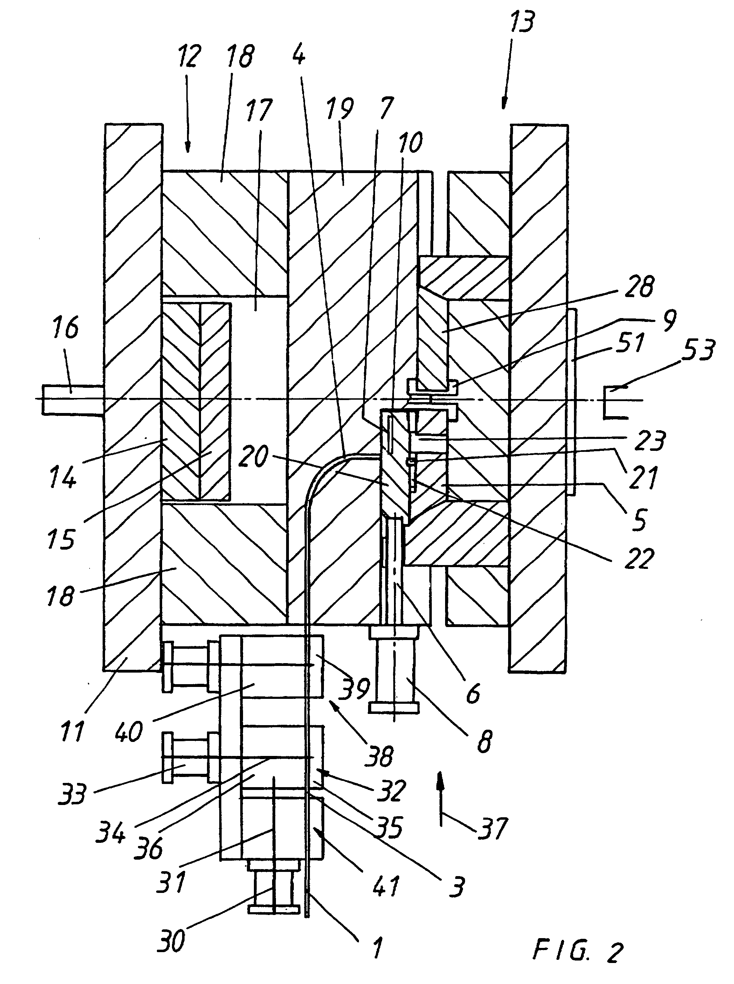

Nachdem in den Figuren 1 und 2 die gleichen Teile mit den gleichen Bezugszeichen versehen sind genügt es, lediglich eine einzige Zeichnung zu erläutern, weil sich die beiden Zeichnungen nur im Hinblick auf ihren Verfahrensfortschritt und der Art der Drahtzuführung unterscheiden.

Insgesamt ist in den Figuren 1 und 2 ein zweiteiliges Formwerkzeug dargestellt, welches aus einem Unterteil 12 und einem Oberteil 13 besteht. Die beiden Teile 12, 13 sind exakt zueinander geführt und sind zu öffnen und zu schließen. Die Öffnungs- und Schließmechanik ist der Einfachheit halber nicht dargestellt.

Das Unterteil 12 besteht aus einer Aufspannplatte 11, in deren Auswerferraum 17 eine Auswerferstützplatte 14 und eine Auswerferhalteplatte 15 angeordnet sind.
Diese beiden Platten 14, 15 sind durch einen Auswerferbolzen 16 in dem Auswerferraum 17 beweglich gelagert.

An die Aufspannplatte 11 schließen sich abstandshaltende Zwischenleisten 18 an, die vorderseitig eine Formplatte 19 tragen.

In der Formplatte 19 ist unten eine Drahtführung 4 für die Zuführung eines Drahtes 1 angeordnet, aus dem später die Insertelemente 10 gearbeitet werden.

Das Oberteil 13 der Spritzgußform besteht im wesentlichen aus einer Aufspannplatte 47, an welcher der Düsenring 51 angeformt ist. Dieser mündet in eine Werkzeugdüse, die nicht näher dargestellt ist. Es ist lediglich der Düsenkanal 52 angedeutet, welcher in die Formkavität 50 des Oberteils 13 mündet.
Es ist ferner eine Formplatte 48 vorhanden, welche entsprechende Druckkeile 49 umgibt, die den geforderten Formschluß im Unterteil 12 ergeben.

In der Figur 1 ist als Drahtzuführung ein Walzenvorschub 2 dargestellt, der aus zwei, einen Walzenspalt zwischen sich ausbildenden Walzen 44, 45 gebildet ist, wobei die Antriebswalze 44 der Gegenwalze 45 gegenübersteht. Mittels eines Zylinders 42 und dessen Kolbenstange wird ein Hebel 43 schwenkbar gelagert, der die Antriebswalze 44 in kraftschlüssige Verbindung zu dem Draht 1 und der gegenüberliegenden Gegenwalze 45 bringt oder entfernt. Der Draht wird über eine trichterförmige Drahtführung 46 zwischen die Walzen 44, 45 geführt.

Der Draht wird schrittweise zyklisch zwischen den Walzen 44, 45 in der Drahtführung 4 vorgeschoben und kann in den Bereich von Prägeleisten 63 gelangen, die sich zyklisch öffnen und schließen, um den Draht an seinem Außenumfang noch entsprechend zu verändern.

In Figur 2 ist als weitere Ausführungsform eines Drahtvorschubes ein Linearvorschub 3 dargestellt, der im wesentlichen aus drei übereinanderliegenden Vorrichtungen besteht. Es ist eine untere Haltevorrichtung 41 vorgesehen, die entsprechend der Pfeilrichtung 37 zusammen mit einem darüber angeordneten Vorschubelement 32 in Richtung auf eine feststehende Klemmvorrichtung 38 verschiebbar ausgebildet ist.

Durch einen Zylinder 30 und einer durch diesen beweglichen Kolbenstange 31 kann die Haltevorrichtung 41 zusammen mit dem Vorschubelement 32 in Pfeilrichtung 37 vorgeschoben werden. Das Vorschubelement 32 weist hierbei eine bewegliche Klemmbacke 35 auf, die einen Klemmspalt in Richtung zu einer gegenüberliegenden feststehenden Klemmbacke 36 bildet. Die Offnungs- und Schließbewegung wird hierbei durch den Zylinder 33 und die Kolbenstange 34 bewirkt, die an der beweglichen Klemmbacke 35 angreift.

Insgesamt hat der Linearvorschub 3 den Vorteil, daß keinerlei Klemmstellen oder Oberflächenveränderungen des vorzuschiebenden Drahtes 1 gegeben sind.

Die Haltevorrichtung 38 weist eine bewegliche Klemmbacke 39 auf, die einer feststehenden Klemmbacke gegenüberliegt. Die bewegliche Klemmbacke 39 wird ebenfalls durch eine Zylinder-Kolbeneinheit gesteuert.

Der Vorschub des Drahtes 1 erfolgt nun derart, daß zunächst das Vorschubelement 32 den Draht klemmt, und der geklemmte Draht durch die Haltevorrichtung 41 in die Drahtzuführung 4 eingeschoben wird, wobei die Klemmvorrichtung 38 währenddessen geöffnet ist. Ist der Draht um den geforderten Vorschubweg gefördert worden, dann schließt die Klemmvorrichtung 38 und gleichzeitig öffnet sich das Vorschubelement 32, welches dann in die Gegenrichtung zur eingezeichneten Pfeilrichtung 37 wieder nach unten verfährt. Der Draht wurde somit um einen gesteuerten Vorschubweg über die Drahtzuführung 4 in das Unterteil 12 gefördert.

Die Umformung des Drahtes erfolgt nun in dem Unterteil 12 gemäß der nachfolgenden Beschreibung:

Das Drahtende 24 wird zunächst in eine Biegekammer 23 gefördert, welche durch eine Ausnehmung in einem Biegeschieber 5 definiert wird. Der Biegeschieber wird durch eine geeignete Vorrichtung angetrieben.

Es ist ferner ein parallel zu dem Biegeschieber 5 verschiebbares Schneid- und Transportelement 6 vorhanden, dem gegenüberliegend Fixierelemente 7 angeordnet sind.

Das Schneid- und Transportelement 6 ist durch einen Zylinder 8 und dessen Kolbenstange in vertikaler Richtung verschiebbar ausgebildet.

Das Drahtende 24 wird durch die erwähnten Fixierelemente 7 und 25 geklemmt und positionsgenau in Stellung gehalten.

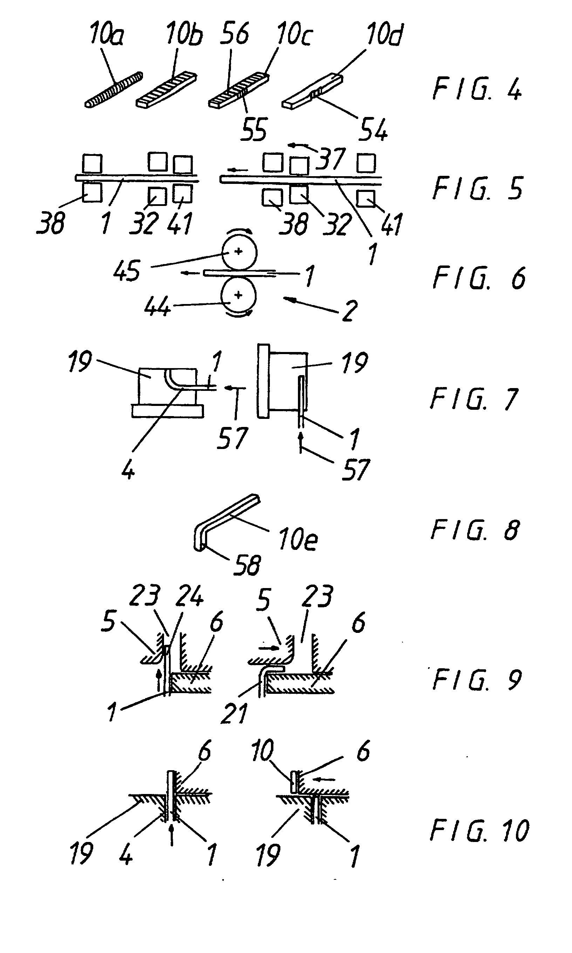

Es werden nun die erforderlichen Umformvorgänge vorgenommen. An dem Schneid- und Transportelement ist ein Mitnehmer 21 angeformt, der in einer Mitnehmerkammer 22 des Biegeschiebers 5 verschiebbar ausgebildet ist. Das Schneid- und Transportelement 6 fährt nach oben und schneidet das Insertelement 10 ab. Gleichzeitig wird das Element 10 (siehe hierzu auch die Darstellungen in den später zu beschreibenden Figuren 5-10) gegen den Biegeschieber 5 gedrückt und gebogen, so daß sich eine Abkröpfung 58 am Insertelement 10 (Figur 8) bildet. Wenn das Schneid- und Transportelement 6 eine gewisse Strecke nach oben gefahren ist, wird der Biegeschieber 5 durch den Mitnehmer mitgenommen und in seine Endposition gebracht. Das Insertelement 10 wird nun gem. Fig. 2 in der geschlossenen Formkavität positionsgenau gehalten und durch die erwähnten Fixierelemente 7,25 befestigt.

Für die Öffnungsbewegung des Biegeschiebers gilt entsprechend wie oben beschreiben, daß zunächst das Schneid- und Transportelement 6 nach unten fährt, um dann den Biegeschieber 5 mitzunehmen

Nach dem Schneiden und Formen des Insertelements 10 und geschlossener Spritzgußform wird nun über den Düsenring 51 und eine Werkzeugdüse eine Spritzgußmasse in die Formkavität 26, 50 eingespritzt, in welcher das Spritzgußteil 9 schließlich hergestellt wird. Das Spritzgußteil 9 weist beispielsweise zwei voneinander beabstandete Flansche 29a, b auf, welche durch einen mittleren Kunststoffkörper kleineren Durchmessers miteinander verbunden sind. Das Insertelement 10 ist hierbei als abgekröpfter Haken an dem einen Flansch 29a angeformt und fest mit diesem verbunden.

Die Formkavität 26, 50 wird u. a. durch einen Dorn 27 gebildet, der eine mittlere Ausnehmung in dem Kunststoffspritzgußteil 9 ausbildet.

Die gegenüberliegende Seite der Formkavität 26 wird durch einen oberen Formschieber 28 gebildet, der ebenfalls vertikal verfahrbar ist.

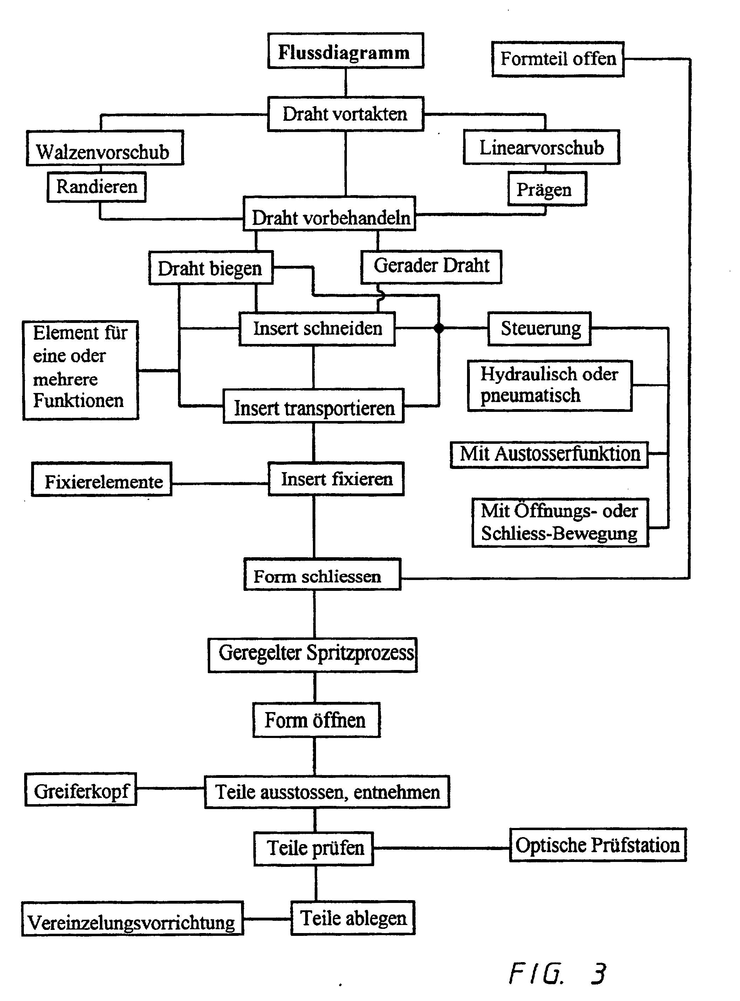

In Figur 3 ist der Ablaufplan (Flußdiagramm) für die Zuführung eines Drahtes und dessen Umformung in ein Insertelement 10 und die Herstellung des Kunststoffspritzgußteils 9 im einzelnen dargestellt. Hierauf beziehen sich die Verfahrensmerkmale der Erfindung.

In Figur 4 sind verschiedene mögliche Formgebungen von den Insertelementen 10a, 10b, 10c, 10d dargestellt. Es ist erkennbar, daß die Oberfläche der Insertelemente, z. B. des Insertelements 10c eine Randrierung 56 aufweist. Ebenso können die seitlichen Schmalseiten des Insertelements eine Randrierung 55 und/oder eine Prägung 54 aufweisen.

In Figur 5 ist ein Vorschubprinzip des Linearvorschubes 3 nochmals dargestellt. In seiner Ruhestellung wird der Draht 1 mindestens durch die Klemmvorrichtung 38 und/oder Haltevorrichtung 41 klemmend gehalten. Beim Vorschub des Drahtes 1 setzt das Vorschubelement 32 am Draht 1 klemmend an, wobei gleichzeitig die Klemmvorrichtung 38 und die Haltevorrichtung 41 lösen, und schiebt den Draht 1 in Vorschubrichtung um eine definierte Strecke vorwärts. Auf diese Weise wird ein gesteuerter Drahtvorschub erreicht.

Figur 6 zeigt das Prinzip eines Walzenvorschubs 2 mit zwei gegenläufigen, den Draht 1 zwischen sich aufnehmenden Walzen 44, 45, die den Draht 1 um einen definierten Betrag in Vorwärtsrichtung transportieren.

Die Figur 7 zeigt, die Zuführung des Drahtes 1 in Pfeilrichtung 57 über die Drahtzuführung 4 in die Formplatte 19 entweder in Ausstoßerrichtung horizontal oder im Bereich der Trennungsebene vertikal oder horizontal.

Die Figur 8 zeigt die Ausbildung eines Insertelements 10e mit einer Abkröpfung 58.

Die Figur 9 zeigt, wie ein derartiges abgekröpftes Insertelement 10e hergestellt wird. Der Draht 1 wird im Bereich des Schneid- und Transportelements 6 gehalten und dessen freies Ende 24 greift in die Biegekammer 23 ein. Durch Verschieben des Biegeschiebers 5 senkrecht zum Drahtende und parallel zum Schneid- und Transportelement 6 wird das Drahtende 24 rechtwinklig abgebogen. Der Biegeschieber 5 und das Schneid- und Transportelement 6 sind etwa um Drahtbreite voneinander beabstandet, so daß das abgebogene Drahtende nicht zwischen den Teilen 5, 6 eingeklemmt wird.
In Figur 10 ist dargestellt, daß der Draht 1 über die Drahtzuführung 4 in eine entsprechende Ausnehmung eingebracht wird und durch den Schneid- und Transportschieber 6 abgeschnitten wird, so daß nur noch das spätere Insertelement 10 in der Form verbleibt, welches in dieser Stellung über die vorher erwähnten Fixierelemente 7,25 in der Form exakt geklemmt und fixiert wird.

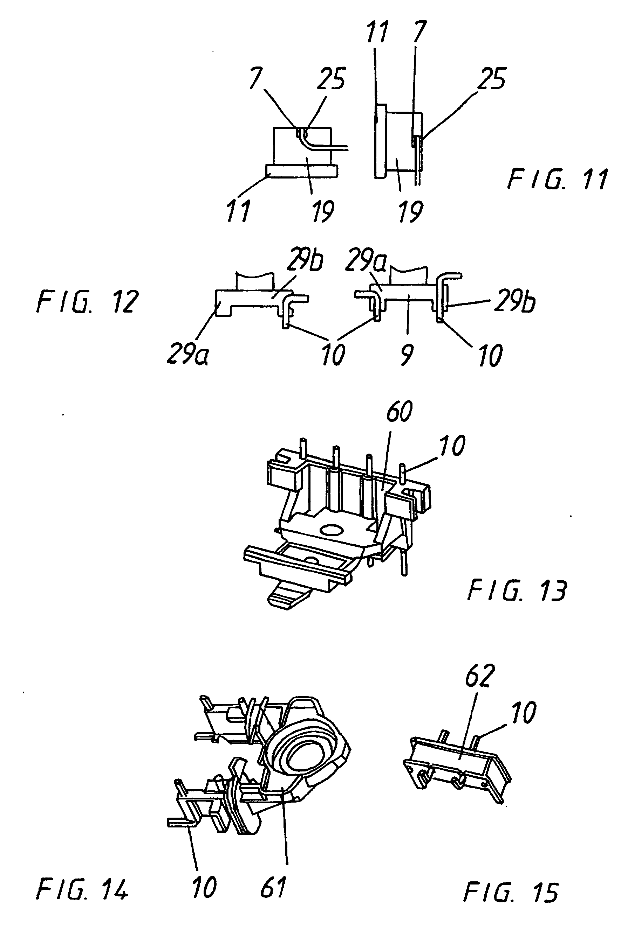

Die Figur 11 zeigt beispielsweise wie die Drahtenden jeweils durch die vorher erwähnten Fixierelemente 7,25 klemmend in ihrer Spritzposition gehalten werden. Hierdurch wird ein Umspritzen ohne Gratbildung ermöglicht.

Figur 12 zeigt die Einformung bzw. Umspritzung der Insertelemente 10 an zugeordneten Flanschen 29a bzw. 29b eines Spritzgußteils 9.
Das Spritzgußteil 9 muß nicht notwendigerweise die hier dargestellte Formgebung ausweisen. Es kann sich um sehr komplizierte Spritzgußteile handeln, wie anhand der Figuren 13-15 erläutert wird.

Das in Fig. 13 dargestellte Spritzgußteil besteht aus einem Kunststoffkörper 60, in dem die vorher erwähnten Insertelemente 10 eingeformt sind. Die Insertelemente sind hierbei gerade und nicht abgewinkelt oder gebogen.

Bei dem Kunststoffkörper 61 nach Figur 14 oder dem Kunststoffkörper 62 nach Figur 15 sind jeweils abgekröpfte Insertelemente eingeformt.

Vorteil des dargestellten Verfahrens ist also eine sehr hohe Verfahrensleistung mit einer bisher nicht erreichten Präzision der Halterung der Insertelemente in den beschriebenen Kunststoffspritzgußteilen.

### Zeichnungslegende

- 1: Draht
- 2: Walzenvorschub
- 3: Linearvorschub
- 4: Drahtzuführung
- 5: Biegeschieber
- 6: Schneid- und Transportelement
- 7: Fixierelement
- 8: Zylinder
- 9: Spritzgußteil
- 10: Insertelement
- 11: Aufspannplatte
- 12: Unterteil
- 13: Oberteil
- 14: Auswerferstützplatte
- 15: Auswerferhalteplatte
- 16: Auswerferbolzen
- 17: Auswerferraum
- 18: Zwischenleiste
- 19: Formplatte
- 21: Mitnehmer
- 22: Mitnehmerkammer
- 23: Biegekammer
- 24: Drahtende
- 25: Fixierelement
- 26: Formkavität
- 27: Dorn
- 28: Formschieber
- 29: Flansch a,b
- 30: Zylinder
- 31: Kolbenstange
- 32: Vorschubelement
- 33: Zylinder
- 34: Kolbenstange
- 35: Klemmbacke (beweglich)
- 36: Klemmbacke (fest)
- 37: Pfeilrichtung
- 38: Klemmvorrichtung
- 39: Klemmbacke (beweglich)
- 40: Klemmbacke (fest)
- 41: Haltevorrichtung
- 42: Zylinder
- 43: Hebel
- 44: Antriebswalze
- 45: Gegenwalze
- 46: Drahtführung
- 47: Aufspannplatte
- 48: Formplatte
- 49: Druckkeil
- 50: Formkavität
- 51: Düsenring
- 52: Düsenkanal
- 53: Zylinderdüse
- 54: Prägung
- 55: Randierung
- 56: Randierung
- 57: Pfeilrichtung
- 58: Abkröpfung
- 60: Kunststoffkörper
- 61: Kunststoffkörper
- 62: Kunststoffkörper
- 63: Prägeleiste

## Patentansprüche

1. Verfahren zum Betrieb einer Spritzgußform, bei dem
im Verlaufe des Spritzgußzyklus mindestens ein Insertelement (10) in die Spritzgußform (12,13) eingeführt, zugerichtet und lagerichtig positioniert wird, um dann während des Spritzgießvorganges mit Spritzgußmasse umspritzt zu werden,
**dadurch gekennzeichnet,**
**dass** das Insertelement (10) aus endlos zugeführtem Draht (1) oder Drahtelementen gebildet und durch den Werkzeugschließvorgang in Form gebracht wird.

2. Verfahren nach Anspruch 1, **dadurch gekennzeichnet, daß** der Draht (1) oder das Drahtelement in die Form eingebracht wird und zugerichtet, gebogen und lagenrichtig dem späteren Spritzgußteil (9) zugeordnet wird, und daß dann das Spritzgußteil (9) selbst durch Formspritzen hergestellt wird, wobei das gebildete Insertelement (10) mit der Spritzgußmasse des Spritzgußteils umspritzt wird.

3. Verfahren nach einem der Ansprüche 1 oder 2, **dadurch gekennzeichnet, daß** die Drahteinführung und die Drahtfixierung bei geöffneten Formhälften (12,13) erfolgt, und das Umformen und das Abschneiden des Drahtes (1) bei sich schließenden oder geschlossenen Formhälften erfolgt.

4. Verfahren nach einem der Ansprüche 1 bis 3, **dadurch gekennzeichnet, daß** in einem ersten Verfahrensschritt bei geöffneten Formhälften (12,13) über eine entsprechende Drahtzuführung (4) der Draht (1) über eine definierte Länge in mindestens eine der Formhälften (12,13) eingeführt wird und lagenrichtig und positionsgenau fixiert wird;
daß in einem zweiten Verfahrensschritt die erforderlichen Umformvorgänge an dem Draht (1) vorgenommen werden, der in beliebiger Weise geformt werden kann,
daß in einem weiteren Verfahrensschritt der Draht (1) abgeschnitten und mit Positions- und Fixierelementen (25) in der einen Formhälfte (12,13) festgehalten wird,
daß in einem nachfolgenden Verfahrensschritt die Formhälften (12,13) geschlossen und in die Formkavität die Spritzgußmasse eingespritzt wird, die dann das lagengenau und positionsgenau gehaltene Insertelement (10) umspritzt und mit dem Spritzgußteil (9) verbindet.

5. Verfahren nach einem der Ansprüche 1 bis 4, **dadurch gekennzeichnet, daß** der Vorschub des Drahtes (1) in einem halbgeschlossenen
Spritzgußwerkzeug (12,13) derart erfolgt, daß dessen Enden mittels hochglanzpolierter Führungen umgelenkt werden und gewünschte räumliche Gebilde entstehen.

6. Verfahren nach einem der Ansprüche 1 bis 5, **dadurch gekennzeichnet, daß** das Insertelement (10) nur punktuell und/oder linienförmig in der gewünschten Spritzgußform (12,13) positioniert wird und dann bis auf diese Positionierpunkte und/oder Linien vollständig von der Spritzgußmasse des Spritzgußteils (9) umgeben wird.

7. Verfahren nach einem der Ansprüche 1 bis 6, **gekennzeichnet durch** folgende Schritte:
- Vortakten der Drähte (1);
- Positionieren der Drähte in der Kavität;
- Schneiden der Drähte;
- Schließen der Form (12,13);
- Geregelter Spritzprozeß;
- Öffnen der Form (1213); und
- Ausstoßen und Entnehmen der Spritzgußeile (9).

8. Verfahren nach einem der Ansprüche 1 bis 7, **gekennzeichnet durch** folgende Schritte:
- Vortakten der Drähte (1);
- Formen der Drähte;
- Schneiden der Drähte;
- Transport der Insertelemente (10);
- Fixieren der Insertelemente;
- Schließen der Form (12,13);
- Geregelter Spritzprozeß;
- Öffnen der Form;
- Ausstoßen und Entnehmen der Spritzgußteile (9).

9. Verfahren nach einem der Ansprüche 1 bis 8, **gekennzeichnet durch** folgende weitere Schritte:
- Prüfen der Spritzgußteile (9);
- Ablegen der Spritzgußteile; und
- Periphere mechanische Nachbehandlung der Spritrgußteile.

10. Verfahren nach einem der Ansprüche 1 bis 9, **dadurch gekennzeichnet, daß** die Drähte (1) durch Biegen, Kröpfen, Abflachen, Zuspitzen geformt werden.

11. Verfahren nach einem der Ansprüche 1 bis 10, **dadurch gekennzeichnet, daß** die Oberfläche der Drähte (1) durch Randrieren, Prägen, Walzen, Anquetschen oder auch Auftragsmechanismen verändert wird.

12. Verfahren nach einem der Ansprüche 1 bis 11, **dadurch gekennzeichnet, daß** in der Spritzgußform (12,13) zusätzliche, bereits eingelegte Insertelemente vorhanden sind, die mit in das Spritzgußteil (9) eingespritzt werden.

13. Spritzgußform zur Durchführung des Verfahrens gemäß den Ansprüchen 1 bis 12, mit mindestens zwei Formhälften, wobei an mindestens einer Formhälfte (12,13) der Spritzgußform mindestens eine Zuführung für einen Draht (1) zur Bildung von Insertelementen (10) angeordnet ist,
**dadurch gekennzeichnet,**
**daß** mindestens in einer Formhälfte (12,13) Abschneidewerkzeuge (6) und/oder Biege- und Umformwerkzeuge (5) und/oder Fixierelemente (7) derart angeordnet sind, dass das Insertelement (10) durch den Werkzeugschließvorgang in Form bringbar ist.

14. Spritzgußform nach Anspruch 13, **dadurch gekennzeichnet, daß** die Drahtzuführung (4) als lineare Zuführung mit entsprechenden Vorschubelementen (32) ausgebildet ist.

15. Spritzgußform nach Anspruch 13 oder 14, **dadurch gekennzeichnet, daß** die Drahtzuführung (4) in Form eines Walzenvorschubes (44,45) ausgebildet ist.

16. Spritzgußform nach Anspruch 15, **dadurch gekennzeichnet, daß** mit den Walzen (44,45) eine zusätzliche Bearbeitung der Drähte (1) erfolgt.

17. Spritzgußform nach Anspruch 15 oder 16, **dadurch gekennzeichnet, daß** die Oberflächen der Walzen (44,45) entsprechend aufgerauht oder ausgeformt sind.

18. Spritzgußform nach einem der Ansprüche 13 bis 17, **dadurch gekennzeichnet, daß** ein Teil der Abschneidewerkzeuge (6) und/oder Biege- und Umformwerkzeuge (5) und/oder Fixierelemente (7) in der gegenüberliegenden Formhälfte (13,12) angeordnet sind.

19. Spritzgußform nach einem der Ansprüche 13 bis 18, **dadurch gekennzeichnet, daß** die Schneidwerkzeuge (6) an dem offenen Oberteil (13) der Form angeordnet sind.

## Claims

1. Method for operating an injection mould, in which in the course of the injection moulding cycle at least one insert element (10) is inserted into the injection mould (12,13), prepared and correctly positioned, to then be encapsulated during the injection moulding process with injection moulding compound, **characterised in that** the insert element (10) is formed from continuously fed wire (1) or wire elements and is brought into the mould by the mould closing process.

2. Method according to claim 1, **characterised in that** the wire (1) or the wire element is introduced into the mould and prepared, bent and allocated in the correct position to the subsequent injection moulded part (9), and **in that** the injection moulded part (9) used is then itself produced by injection moulding, the insert element (10) formed being encapsulated by the injection moulding compound of the injection moulded part.

3. Method according to either of claims 1 or 2, **characterised in that** wire insertion and wire fixing take place with the mould halves (12, 13) open, and the wire (1) is formed and cut when the mould halves are closing or closed.

4. Method according to any one of claims 1 to 3, **characterised in that** in a first method step with the mould halves (12, 13) open, the wire (1) is inserted over a defined length into at least one of the mould halves (12, 13) via a corresponding wire feed (4) and fixed correctly and in the precise position; **in that** in a second method step the required forming processes are carried out on the wire (1), which can be formed as desired, **in that** in a further method step, the wire (1) is cut and fixed with positioning and fixing elements (25) in the one mould half (12, 13), **in that** in a subsequent method step, the mould halves (12, 13) are closed and the injection moulding compound is injected into the mould cavity, which compound then encapsulates the insert element (10), which is held correctly and in the precise position and connects it to the injection moulded part (9).

5. Method according to any one of claims, 1 to 4, **characterised in that** the feed of the wire (1) in a semi-closed injection mould (12, 13) takes place such that the ends thereof are deflected by means of full-gloss polished guides and desired spacial configurations are produced.

6. Method according to any one of claims 1 to 5, **characterised in that** the insert element (10) is positioned in the desired injection mould (12, 13) only at points and/or linearly and is then completely surrounded by the injection moulding compound of the injection moulded part (9), except for these positioning points and/or lines.

7. Method according to any one of claims 1 to 6, **characterised by** the following steps:
-- pre-clocking the wires (1);
-- positioning the wires in the cavity;
-- cutting the wires;
-- closing the mould (12, 13);
-- controlled injection process;
-- opening the mould (12, 13); and
-- ejection and removal of the injection moulded parts (9).

8. Method according to any one of claims 1 to 7, **characterised by** the following steps:
-- pre-clocking the wires (1);
-- forming the wires;
-- cutting the wires;
-- conveying the insert elements (10);
-- fixing the insert elements;
-- closing the mould (12, 13);
-- controlled injection process;
-- opening the mould;
-- ejection and removal of the injection moulded parts (9).

9. Method according to any one of claims 1 to 8, **characterised by** the following . further steps:
-- checking the injection moulded parts (9);
-- depositing the injection moulded parts; and
-- peripheral mechanical after-treatment of the injection moulded parts.

10. Method according to any one of claims 1 to 9, **characterised in that** the wires (1) are formed by bending, crimping, flattening, pointing.

11. Method according to any one of claims 1 to 10, **characterised in that** the surface of the wires (1) is changed by knurling, stamping, rolling, squeezing or also application mechanisms.

12. Method according to any one of claims 1 to 11, **characterised in that** additional, already inserted insert elements are present in the injection mould (12, 13), which are also injected into the injection moulded part (9).

13. Injection mould for carrying out the method according to claims 1 to 12, comprising at least two mould halves, at least one feed for a wire (1) being arranged on at least one mould half (12, 13) of the injection mould to form insert elements (10), **characterised in that** at least in one mould half (12, 13)), cutting tools (6) and/or bending and forming tools (5) and/or fixing elements (7) are arranged in such a way that the insert element (10) can be brought into the mould by the mould closing process.

14. Injection mould according to claim 13, **characterised in that** the wire feed (4) is designed as a linear feed with corresponding feed elements (32).

15. Injection mould according to claim 13 or 14, **characterised in that** the wire feed (4) is designed in the form of a roller feed (44, 45).

16. Injection mould according to claim 15, **characterised in that** an additional processing of the wires (1) takes place with the rollers (44, 45).

17. Injection mould according to claim 15 or 16, **characterised in that** the surfaces of the rollers (44, 45) are accordingly roughened or shaped.

18. Injection mould according to any one of claims 13 to 17, **characterised in that** some of the cutting tools (6), and/or bending and forming tools (5), and/or fixing elements (7) are arranged in the opposing mould half (13, 12).

19. Injection mould according to any one of claims 13 to 18, **characterised in that** the cutting tools (6) are arranged on the open upper part (13) of the mould.

## Revendications

1. Procédé pour faire fonctionner un moule à injection, selon lequel au cours du cycle de moulage par injection, au moins un insert (10) est introduit, mis en place et placé dans la bonne position dans le moule à injection (12, 13), afin d'être ensuite enrobé à l'aide de masse injectée, lors du moulage par injection,
**caractérisé en ce que** l'insert (10) est formé à partir d'un fil métallique sans fin (1) ou d'éléments en fil métallique, et est mis en forme grâce à la fermeture du moule.

2. Procédé selon la revendication 1, **caractérisé en ce que** le fil métallique (1) ou l'élément en fil métallique est placé dans le moule et est associé, mis en place, courbé et dans la bonne position, à la future pièce moulée par injection (9), et **en ce que** la pièce moulée (9) est ensuite fabriquée elle-même par injection, l'insert formé (10) étant enrobé avec la masse injectée de ladite pièce moulée.

3. Procédé selon la revendication 1 ou 2, **caractérisé en ce que** l'insertion et la fixation du fil se font alors que les demi-moules (12, 13) sont ouverts, et le formage et le découpage du fil (1) se font alors que les demi-moules se ferment ou sont fermés.

4. Procédé selon l'une des revendications 1 à 3,
**caractérisé en ce que** lors d'une première étape, alors que les demi-moules (12, 13) sont ouverts, le fil (1) est introduit dans l'un au moins des demi-moules (12, 13) sur une longueur définie, grâce à une amenée de fil appropriée (4), et est fixé avec précision dans la bonne position ;
**en ce que** lors d'une deuxième étape, les opérations de formage nécessaires sont réalisées sur le fil (1), qui peut prendre n'importe quelle forme ;
**en ce que** lors d'une autre étape, le fil (1) est coupé et immobilisé dans un demi-moule (12, 13) à l'aide d'éléments de positionnement et de fixation (25) ;
**en ce que** lors d'une étape suivante, les demi-moules (12, 13) sont fermés et la masse injectée est injectée dans la cavité du moule, enrobe alors l'insert (10) maintenu avec précision dans la bonne position, et le relie à la pièce moulée (9).

5. Procédé selon l'une des revendications 1 à 4, **caractérisé en ce que** l'avance du fil (1) se fait dans un moule à injection (12, 13) à demi fermé de telle sorte que ses extrémités soient déviées à l'aide de guides polis miroir et que les structures spatiales souhaitées se forment.

6. Procédé selon l'une des revendications 1 à 5, **caractérisé en ce que** l'insert (10) n'est positionné que ponctuellement et/ou linéairement dans le moule voulu (12, 13) et est ensuite entièrement entouré par la masse d'injection de la pièce moulée (9), à l'exception de ces points de positionnement et/ou lignes.

7. Procédé selon l'une des revendications 1 à 6, **caractérisé par** les étapes suivantes :
- avance synchronisée des fils (1) ;
- positionnement des fils dans la cavité ;
- découpage des fils ;
- fermeture du moule (12, 13) ;
- injection réglée ;
- ouverture du moule (12, 13) ; et
- éjection et démoulage des pièces moulées (9).

8. Procédé selon l'une des revendications 1 à 7, **caractérisé par** les étapes suivantes :
- avance synchronisée des fils (1) ;
- formage des fils ;
- découpage des fils ;
- transport des inserts (10) ;
- fixation des inserts ;
- fermeture du moule (12, 13) ;
- injection réglée ;
- ouverture du moule ;
- éjection et démoulage des pièces moulées (9).

9. Procédé selon l'une des revendications 1 à 8, **caractérisé par** les étapes supplémentaires suivantes :
- contrôle des pièces moulées (9) ;
- dépôt des pièces moulées ; et
- reprise mécanique périphérique des pièces moulées.

10. Procédé selon l'une des revendications 1 à 9, **caractérisé en ce que** les fils (1) sont formés par cintrage, coudage, aplatissage, effilage.

11. Procédé selon l'une des revendications 1 à 10, **caractérisé en ce que** la surface des fils (1) est modifiée par moletage, matriçage, laminage, écrasement, ou à l'aide de mécanismes de revêtement.

12. Procédé selon l'une des revendications 1 à 11, **caractérisé en ce qu'**il est prévu dans le moule à injection (12, 13) des inserts supplémentaires, déjà mis en place, qui sont injectés eux aussi dans la pièce moulée (9).

13. Moule à injection pour mettre en oeuvre le procédé selon les revendications 1 à 12, avec au moins deux demi-moules, au moins une amenée pour un fil (1) étant disposée sur au moins un demi-moule (12, 13), en vue de former des inserts (10),
**caractérisé en ce que** dans au moins un demi-moule (12, 13), des outils de découpage (6) et/ou de cintrage et de formage (5) et/ou des éléments de fixation (7) sont disposés de telle sorte que l'insert (10) puisse être mis en forme grâce à la fermeture du moule.

14. Moule à injection selon la revendication 13, **caractérisé en ce que** l'amenée de fil (4) est conçue comme une amenée linéaire avec des éléments d'avance appropriés (32).

15. Moule à injection selon la revendication 13 ou 14, **caractérisé en ce que** l'amenée de fil (4) a la forme d'un mécanisme d'avance à cylindres (44, 45).

16. Moule à injection selon la revendication 15, **caractérisé en ce qu'**avec les cylindres (44, 45), un usinage supplémentaire des fils (1) a lieu.

17. Moule à injection selon la revendication 15 ou 16, **caractérisé en ce que** les surfaces des cylindres (44, 45) sont rendues rugueuses ou sont pourvues de bosses d'une manière appropriée.

18. Moule à injection selon l'une des revendications 13 à 17, **caractérisé en ce qu'**une partie des outils de découpage (6) et/ou des outils de cintrage et de formage (5) et/ou des éléments de fixation (7) sont disposés dans le demi-moule opposé (13, 12).

19. Moule à injection selon l'une des revendications 13 à 18, **caractérisé en ce que** les outils de découpage (6) sont disposés sur la partie supérieure (13) ouverte du moule.
